# EUROPEAN PATENT APPLICATION

(11) **EP 2 320 586 A1**
(43) Date of publication of application: **11.05.2011**
(21) Application number: 10189962.3
(22) Date of filing: 04.11.2010
(51) Int. Cl.: H04J 3/16, H04J 14/08, H04Q 11/08, H04J 3/04

(54) **Multiplexing method and associated demultiplexing method**

(30) Priority: 06.11.2009 FR 0905362
(71) Applicant: Alcatel Lucent, 75007 Paris (FR)
(72) Inventor: Rival, Olivier, 91620, Nozay (FR); Antona, Jean-Christophe, 91620, Nozay (FR)
(74) Representative: Keseris, Denis

(57) **Abstract**

The current invention concerns a method for time-division multiplexing of a plurality of signals with a pre-determined fixed bitrate and received on a plurality of inputs (12) of a multiplexer (13) in a Non Return to Zero (NRZ) output signal, said multiplexer (13) comprising:
- a number m of inputs (12) where m=2^{p};
- in which a fraction n of active inputs in which n-2^{(p-q)} where p>q and *p*, *q* ∈ N;

wherein the inactive inputs are assigned to the active inputs so that the number of non-active inputs assigned to an active output is the same for all active inputs and so that an active input and the inactive inputs assigned to it correspond to successive time slots within the multiplexer (13) output signal and wherein the signals received on the active inputs are sent to the inactive inputs assigned to them in such a way as to create a signal redundancy.

## Description

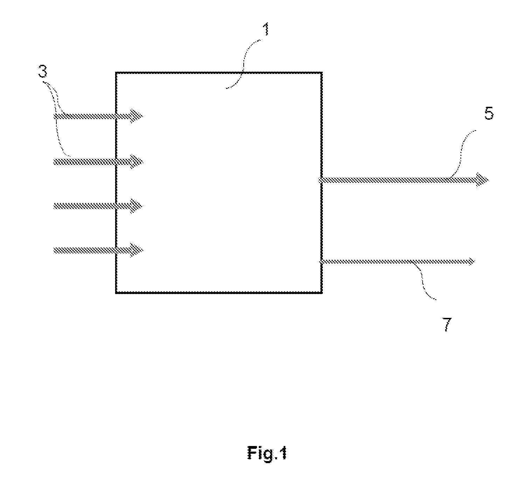

The present invention concerns the field of communication networks, and more particularly the multiplexing and demultiplexing of signals within the network's nodes. Figure 1 depicts a hub 1 of the prior art comprising a plurality of inputs 3 (four, in this situation) having a fixed bitrate (10 Gb/s, for example), an output 5 corresponding to the multiplexed signal, and an output 7 corresponding to the clock signal (40 GHz in this situation). Whenever an input 3 is inactive, meaning that it is not receiving a signal to transmit, the hub carries out bit padding in order to fill up the bits corresponding to the signal of the inactive input, so that the output 5 signal's bitrate is fixed and corresponds to the sum of the bitrates of the inputs 3 (40 Gb/s in this situation), whether or not the inputs 3 are active.

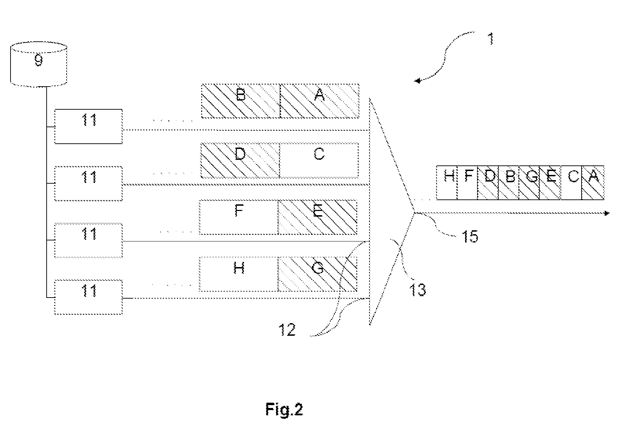

An example embodiment of such a hub 1 in the situation of an optical communication network is given in Figure 2. The hub 1 comprises an electronic router 9 which distributes the signals to the line cards 11 corresponding to each input 12 of the multiplexer 12, the signals are then temporarily multiplexed bit by bit so as to produce a multiplexed signal at the output 15 of the multiplexer 13, this multiplexed signal then being transmitted to electro-optical conversion means such an electro-optical modulator (not depicted). In the diagram in Figure 2 and the following ones, the blocks marked by letters represent the bits of the different signals before and after multiplexing, with the shaded blocks representing level-1 bits and unshaded blocks representing level-0 bits.

Thus, such a hub 1 does not allow for adapting the bitrate of the transmitted signals based on the level of traffic. This lack of flexibility causes the transmission of needless signals, which require the oversizing of the network and increase the operating costs.
The need is therefore to develop hubs that can be used to adjust the bitrate of the transmitted signal based on the number of signals received at the input.
One proposed solution is the use of routers that may deliver and receive variable bitrates coupled to transponders enabling the transmission of variable-bitrate signals.
Nonetheless, this solution requires many changes to the current networks, as well as costly devices, and therefore requires major investments.

The purpose of the present invention is therefore to overcome the aforementioned drawbacks of the prior art and to disclose a method for adapting the bitrate of the output signal of a hub based on the number of signals to transmit, whose implementation is easy and inexpensive.

Thus, the current invention concerns a method for time-division multiplexing of a plurality of signals with a pre-determined fixed bitrate, received on a plurality of inputs of a multiplexer in a Non-Return to Zero (NRZ) type output signal, said multiplexer comprising:
- a number m of inputs (12) where m=2^{p};
- in which a fraction n of active inputs in which n=2^{(p-q)} where p>q and p,q ∈ N; wherein the inactive inputs are assigned to the active inputs so that the number of non-active inputs assigned to an active output is the same for all active inputs and so that an active input and the inactive inputs assigned to it correspond to successive time slots within the multiplexer output signal and wherein the signals received on the active inputs are sent to the inactive inputs assigned to them in such a way as to create a signal redundancy.

According to another aspect of the present invention, the active inputs correspond to inputs receiving outside signals intended to be multiplexed.

According to an additional aspect of the present invention, the input and output signals of the multiplexer are electronic signals.

According to an additional aspect of the present invention, the output of the multiplexer is connected to electro-optical conversion means so as to convert the output signal into an optical signal.

According to another aspect of the present invention, the redundancy of the signals produces a variable-frequency Non-Return to Zero signal, and thereby makes it possible to create an adaptation of the effective bitrate of the output optical signal based on the number of active inputs.

According to an additional aspect of the present invention, the signals received on the active inputs are sent to the inactive inputs which are assigned to them by flipping physical switches.

According to an additional aspect of the present invention, the signals received on the active inputs are sent to the inactive inputs which are assigned to them by changing logical switches.

According to another aspect of the present invention, the information concerning the number and the position of the multiplexer's active inputs are transmitted to a demultiplexer.

The invention also pertains to a time-division multiplexer comprising a plurality of inputs intended to receive at least one signal having a fixed predetermined bitrate and an output intended to transmit a Non Return to Zero (NRZ) output signal comprising:
- a number m of inputs where m=2^{p};
- in which a fraction n of active inputs in which n=2^{(p-q)} where p>q and p,q ∈ N;
and wherein the inactive inputs are assigned to the active inputs so that the number of non-active inputs assigned to an active output is the same for all active inputs and so that an active input and the inactive inputs assigned to it correspond to successive time slots within the time-division multiplexer's output signal, said time-division multiplexer also comprising means for transmitting signals received at the active inputs to the inactive inputs which are assigned to them.

According to another embodiment, the means for transmitting signals received at the active inputs to the inactive inputs which are assigned to them comprise physical switches.

According to one additional embodiment of the present invention, the means for transmitting signals received at the active inputs to the inactive inputs which are assigned to them comprise logical switches.

According to another embodiment of the present invention, the multiplexer also comprises electro-optical conversion means making it possible to convert the output signal into an optical signal.

According to an additional embodiment of the present invention, the multiplexer also comprises means for transmitting information concerning the number and position of the multiplexer's active inputs to a demultiplexer.

The invention also pertains to a time-division demultiplexer comprising an input intended to receive a Non Return to Zero (NRZ) signal emitted by a time-division multiplexer according to claim 13 and a plurality of outputs intended to transmit the demultiplexed signals; said time-division demultiplexer also comprises means for receiving information concerning the number and position of the active inputs transmitted by said temporal multiplexer and means for blocking the demultiplexed signals corresponding to the multiplexer's inactive inputs.

Other characteristics and benefits of the invention will become apparent from the following description, given with reference to the attached drawings, which by way of a nonlimiting example depict one possible embodiment.

In these drawings:
- Figure 1 depicts a diagram of a hub of the prior art;
- Figure 2 depicts an example embodiment of a hub of the prior art;
- Figure 3 depicts a diagram showing two digital signals and their analog counterparts according to an NRZ code;
- Figure 4 depicts an example embodiment of the inventive hub;
- Figure 5 depicts an operating diagram of the inventive hub if half of the inputs are inactive;
- Figure 6 depicts an operating diagram of the inventive hub if three-quarters of the inputs are inactive;
- Figure 7 depicts an example embodiment of a hub of the prior art;
- Figure 8 depicts an operating diagram of the inventive hub if half of the hub's inputs are inactive;
- Figure 9 depicts an operating diagram of the inventive hub if three-quarters of the hub's inputs are inactive;

In the following description, generally:
The "active input" of a multiplexer refers to an input receiving a signal (generally coming from a router and received at a line card) distinct from the other inputs and to be transmitted to another node of the network;
The "inactive input" of a multiplexer refers to an input of the multiplexer that receives no signal (generally coming from a router and received at a line card) distinct from the other inputs and to be transmitted to another node of the network;
"NRZ" refers to the acronym Non-Return to Zero;

The embodiments of the present invention pertain to a method based on the property of Non-Return to Zero (NRZ) signals whereby a signal comprising N successive identical bits at a bitrate B is identical to a signal comprising a single bit of the same value but transmitted at a bitrate B/N.

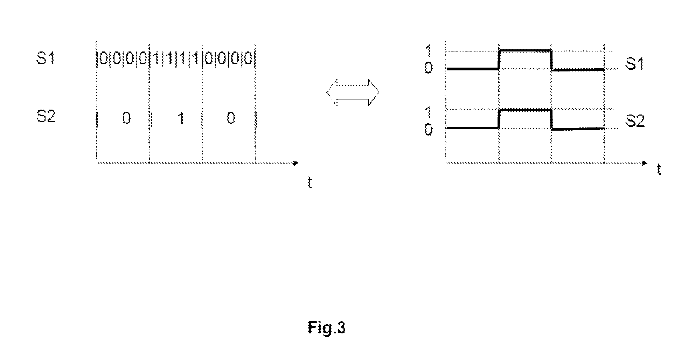

This property is depicted in the example of Figure 3. The signal S1 corresponds to a signal comprising 4 successive identical bits at a bitrate B (of 40 Gb/s, for example) while the signal S2 corresponds to a signal comprising one bit identical to the 4 bits of the signal S1 but at one-fourth the bitrate (10 Gb/s for example). The left-hand part of the diagram depicts these signals in a digital manner. The right-hand part of the diagram depicts these signals in an analog manner, if Non-Return to Zero (NRZ) coding is used. It is observed that the two signals are identical.

Thus, in NRZ coding, by creating a redundancy of digital bits, it is possible to create an identical signal but at a different bitrate.

The embodiments of the present invention therefore propose, when the number of inactive inputs matches a fraction of a power of 2 (1/2ⁿ) of a total number of inputs (for example ½, ¼, or 1/8), to send the active outputs' signals to these inactive outputs so as to create a redundancy of digital signals at the output of the multiplexer 13 and thereby to produce an analog NRZ signal whose effective bitrate is reduced by the corresponding power of 2 (for example, by 2, 4, 8).

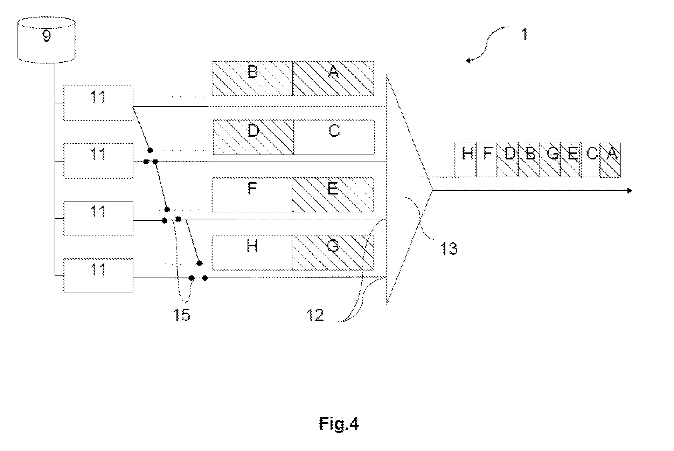

Figure 4 shows an example embodiment of the inventive hub 1. As with the hub 1 of Figure 2, it comprises a router 9 that distributes the signals to the inputs 12 of a multiplexer 13 by means of line cards 11. The major difference is that it comprises switches 15 making it possible to send a signal transmitted by the line card 11 from an input 12 of the multiplexer 13 to the next input 12 of the multiplexer 13.

In the situation in Figure 4, the router 9 transmits four independent signals to the four line cards 11 of the four inputs 12 of the multiplexer 13, so that all of the inputs 12 are active. In this way, the switches are positioned so as to transmit the output signals from the line cards 11 to the inputs 12 of the multiplexer 13. If each input receives a 10 Gb/s signal, the output signal of the multiplexer 13 will have a bitrate of 40 Gb/s.

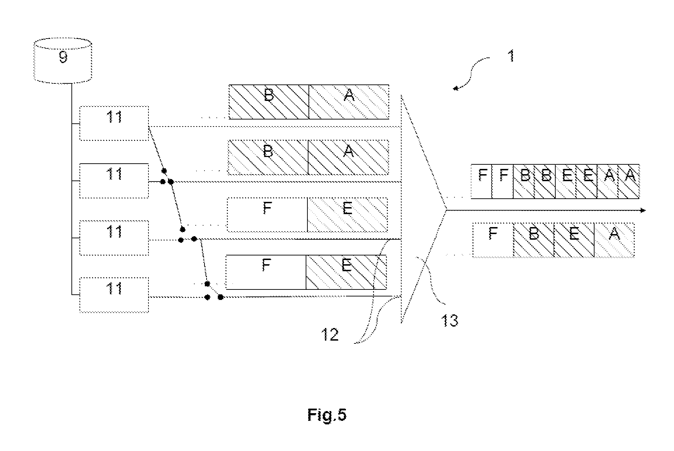

If the router 9 transmits only two signals (Figure 5), these signals are transmitted to the line cards 11 of the first and third inputs 12 of the multiplexer 13. Additionally, the switches 15 corresponding to the second and fourth inputs 12 are positioned so as to transmit the corresponding signals to the first and third input 12, respectively, to the second and fourth input 12. This change in configuration is therefore done by tripping the switches 15. Thus, sending identical bits to two consecutive inputs 12 causes the bits to be doubled at the output, and produces an NRZ output signal whose bitrate is divided by two (20 Gb/s for signals which are 10 Gb/s at the input) and depicted by the lower blocks within the output.

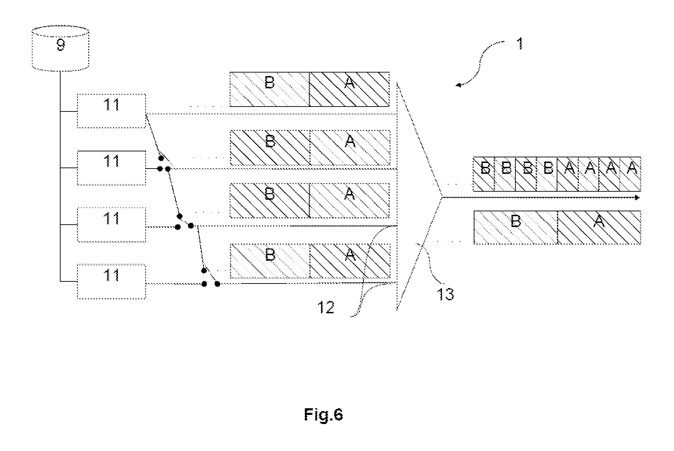

Likewise, Figure 6 depicts the situation in which a single input 12 is active (for 2 to the power 0 (2⁰=1)). The first input's 12 signal is then transmitted to the three other inputs 12 in order to create an output signal whose bitrate is divided by four (10 Gb/s for signals which are 10 Gb/s at their input).

Additionally, if the number of active inputs 12 is different from a power of two, the bit padding method may be used in order to achieve the next power of two after the number of active inputs.

Furthermore, according to another embodiment, the tripping carried out by the switches 15 may be carried out by digital or logical functions, or any other means making it possible to send the signal from an input 12 to another input 12.

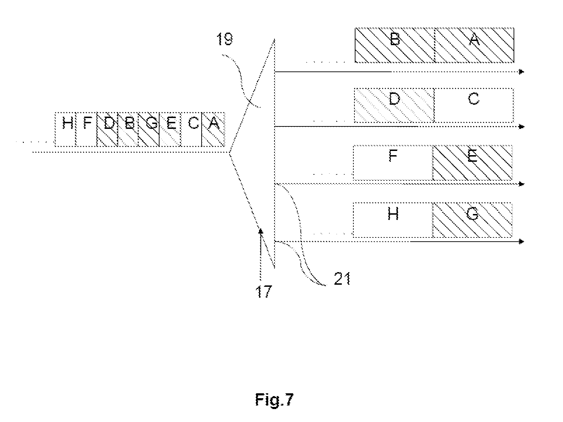

Figure 7 shows a prior-art demultiplexing diagram. The clock frequency 17 is constant, and corresponds to the clock frequency of the multiplexer 12 (for example, 40 GHz). Thus, the bits are demultiplexed and sent to the corresponding outputs 21 of the demultiplexer 19 so as to recreate the input signals of the multiplexer 13.

According to the embodiments of the present invention, operation is identical, the clock signal 17 also matches the clock signal of multiplexer 13 (40 GHz for example). Thus, the signals corresponding to the active inputs of the multiplexer 13 are recreated on the outputs 21 of the demultiplexer 19. Nonetheless, in order to block the signals corresponding to the inactive inputs of the multiplexer 13 (and therefore corresponding to a duplication of the signals of the multiplexer's 13 active inputs), additional information corresponding to the number and location of the signals to be transmitted (or signals to be blocked) must be transmitted to the demultiplexer 19.

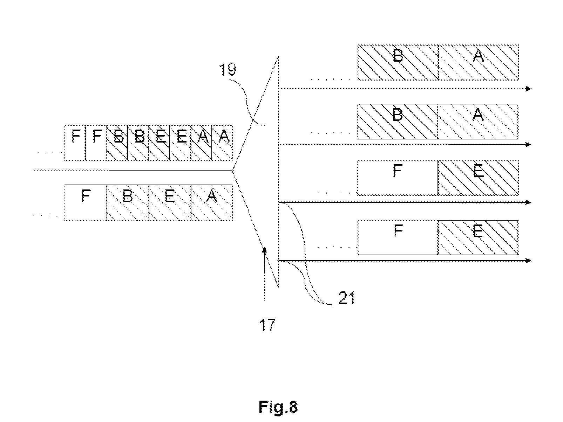

Thus, in the example of Figure 8 which corresponds to demultiplexing the signals multiplexed in Figure 5, the information corresponding to the fact that only the signals of the first and third outputs 21 of the demultiplexer are useful signals.

In this example, as the useful signals are always transmitted on the same channels, only the indication of the number of useful signals transmitted will be necessary (for example, by indicating to the demultiplexer that two useful signals are transmitted, it will then know that these signals are transmitted to outputs 1 and 3 and that the signals from outputs 2 and 4 must be blocked.)

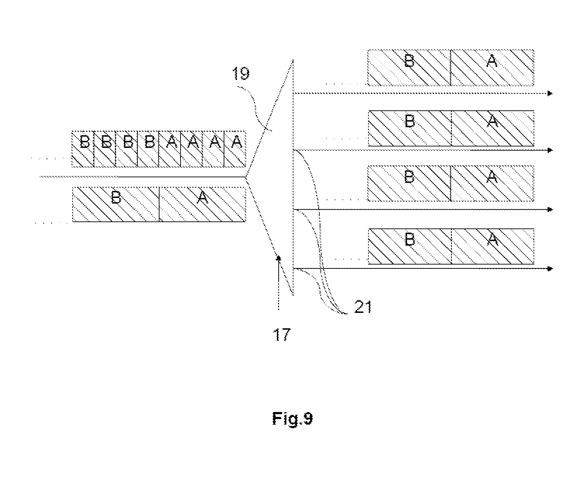

In the same way, Figure 9 corresponds to demultiplexing the signals multiplexed in Figure 6, and the demultiplexer 19 must receive the information corresponding to the number of useful signals so as to block the signals transmitted at outputs 2, 3, and 4.

Thus, the present invention makes it possible, if NRZ signals are transmitted, to alter the bitrate of the transmitted multiplexed signal based on the quantity of signals to be transmitted without altering the ports of the router 9. Implementing the embodiments of the invention only requires installing switches 15 that make it possible to send a signal from an input 12 of the multiplexer 13 to the next one in order to produce a redundancy of signals, and transmitting to the demultiplexer 19 the information concerning the number, and potentially, the position of the useful signals. Additionally, the embodiments of the invention may apply to all types of networks using NRZ signals, and particularly Wavelength Division Multiplexing (WDM) networks.

## Claims

1. A method for time-division multiplexing of a plurality of signals with a predetermined fixed bitrate received at a plurality of inputs (12) of a multiplexer (13) in a Non-Return to Zero (NRZ) output signal, said multiplexer (13) comprising:
a number m of inputs (12) where m=2^{p};
- in which a fraction n of active inputs in which n=2^{(p-q)} where p>q and P,q ∈ N;
wherein the inactive inputs are assigned to the active inputs so that the number of non-active inputs assigned to an active output is the same for all active inputs and so that an active input and the inactive inputs assigned to it correspond to successive time slots within the multiplexer (13) output signal and wherein the signals received on the active inputs are sent to the inactive inputs assigned to them in such a way as to create a signal redundancy.

2. A method for time-division multiplexing according to claim 1, wherein the active inputs correspond to the inputs receiving outside signals intended to be multiplexed.

3. A method for time-division multiplexing according to claim 1 or 2, wherein the input and output signals of the multiplexer (13) are electronic signals.

4. A method for time-division multiplexing according to one of the previous claims, wherein the output of the multiplexer (13) is connected to electro-optical conversion means so as to convert the output signal into an optical signal.

5. A method for time-division multiplexing according to claim 4, wherein the signal redundancy produces a variable-frequency Non-Return to Zero signal and thereby makes it possible to create an adaptation of the effective bitrate of the output optical signal based on the number of active inputs.

6. A method for time-division multiplexing according to one of the previous claims, wherein the signals received at the active inputs are sent to the inactive inputs which are assigned to them by the tripping of physical switches (15).

7. A method for time-division multiplexing according to one of the previous claims, wherein the signals received at the active inputs are sent to the inactive inputs which are assigned to them by the tripping of logical switches (15).

8. A method for time-division multiplexing according to one of the previous claims, wherein the information concerning the number and position of the active inputs of the multiplexer (13) are transmitted to a demultiplexer (19).

9. A time-division multiplexer comprising a plurality of inputs (12) intended to receive at least one signal having a predetermined fixed bitrate and an output (15) intended to transmit a Non-Return to Zero output signal comprising:
a number m of inputs (12) where m=2^{P};
- in which a fraction n of active inputs in which n=2^{(p-q)} where p>q and p, q ∈ N;
and wherein the inactive inputs are assigned to the active inputs so that the number of non-active inputs assigned to an active output is the same for all active inputs and so that an active input and the inactive inputs assigned to it correspond to successive time slots within the multiplexer (13) output signal, said time-division multiplexer (13) also comprising means for transmitting signals received at the active inputs to the inactive inputs which are assigned to them.

10. A time-division multiplexer according to claim 9 wherein the means for transmitting signals received at the active inputs to the inactive inputs which are assigned to them comprise physical switches (15).

11. A time-division multiplexer according to claim 9 wherein the means for transmitting signals received at the active inputs to the inactive inputs which are assigned to them comprise logical switches (15).

12. A time-division multiplexer according to one of the claims 9 to 11 further comprising electro-optical conversion means making it possible to convert the output signal into an optical signal.

13. A time-division multiplexer according to one of the claims 9 to 12 further comprising means for transmitting information concerning the number and position of the active inputs of the multiplexer (13) to a demultiplexer (19).

14. A time-division demultiplexer (19) comprising an input intended to receive a Non-Return to Zero (NRZ) emitted by a time-division multiplexer (13) according to claim 13 and a plurality of outputs (21) intended to transmit the demultiplexed signals, said time-division demultiplexer (19) further comprises means for receiving information concerning the number and position of the active inputs transmitted by said time-division multiplexer (13) and means for blocking the demultiplexed signals corresponding to the multiplexer's (13) inactive inputs.

## Amended claims

### Amended claims in accordance with Rule 137(2) EPC.

**1.** A method for the time-division multiplexing of a plurality of signals with a predetermined fixed bitrate received at a number in inputs (12), where m=2ⁿ, of a multiplexer (13) and in which a number n of the m inputs are active inputs, in which n=2 (p-q) and p>q and *p,q* ∈ N, in a Non-Return to Zero, NRZ, output signal, the method being **characterized by** the step of:
assigning inactive inputs to active inputs such that the number of non-active inputs assigned to an active input is the same for all active inputs and so that an active input and the inactive inputs assigned to it correspond to successive time slots within the multiplexer (13) output signal and wherein the signals received on the active inputs are sent to the inactive inputs assigned to them in such a way as to create a digital signal redundancy at the output of the time-division multiplexer.

**2.** A method for time-division multiplexing according to claim 1, wherein the active inputs correspond to the inputs receiving outside signals intended to be multiplexed.

**3.** A method for time-division multiplexing according to claim 1 or 2, wherein the input and output signals of the multiplexer (13) are electronic signals.

**4.** A method for time-division multiplexing according to one of the previous claims, wherein the output of the multiplexer (13) is connected to electro-optical conversion means so as to convert the output signal into an optical signal.

**5.** A method for time-division multiplexing according to claim 4, wherein the signal redundancy produces a variable-frequency Non-Return to Zero signal and thereby makes it possible to create an adaptation of the effective bitrate of the output optical signal based on the number of active inputs.

**6.** A method for time-division multiplexing according to one of the previous claims, wherein the signals received at the active inputs are sent to the inactive inputs which are assigned to them by the tripping of physical switches (15).

**7.** A method for time-division multiplexing according to one of the previous claims, wherein the signals received at the active inputs are sent to the inactive inputs which are assigned to them by the tripping of logical switches (15).

**8.** A method for time-division multiplexing according to one of the previous claims, wherein the information concerning the number and position of the active inputs of the multiplexer (13) are transmitted to a demultiplexer (19).

**9.** A time-division multiplexer comprising a plurality of inputs (12) intended to receive at least one signal having a predetermined fixed bitrate and an output (15) intended to transmit a Non-Return to Zero output signal, the time-division mutliplexer comprising:
a number m of inputs (12) where m=2^{p};
- in which a fraction n of active inputs in which n=2^{(p-q)} where p>q and *p,q* ∈ N;
and the multiplexer being **characterized by**: the inactive inputs are assigned to the active inputs so that the number of non-active inputs assigned to an active input is the same for all active inputs and so that an active input and the inactive inputs assigned to it correspond to successive time slots within the multiplexer (13) output signal, said time-division multiplexer (13) also comprising means for transmitting signals received at the active inputs to the inactive inputs which are assigned to them, in such a way as to create a digital signal redundancy at the output of the time-division multiplexer.

**10.** A time-division multiplexer according to claim 9 wherein the means for transmitting signals received at the active inputs to the inactive inputs which are assigned to them comprise physical switches (15).

**11.** A time-division multiplexer according to claim 9 the means for transmitting signals received at the active inputs to the inactive inputs which are assigned to them comprise logical switches (15).

**12.** A time-division multiplexer according to one of the claims 9 to 11 further comprising electro-optical conversion means making it possible to convert the output signal into an optical signal.

**13.** A time-division multiplexer according to one of the claims 9 to 12 further comprising means for transmitting information concerning the number and position of the active inputs of the multiplexer (13) to a demultiplexer (19).

**14.** A time-division demultiplexer (19) comprising an input intended to receive a Non-Return to Zero, NRZ, emitted by a time-division multiplexer (13) according to claim 13 and a plurality of outputs (21) intended to transmit the demultiplexed signals, said time-division demultiplexer (19) further comprises means for receiving information concerning the number and position of the active inputs transmitted by said time-division multiplexer (13) and means for blocking the demultiplexed signals corresponding to the multiplexer's (13) inactive inputs.
